**Europäisches Patentamt**

**European Patent Office**

**Office européen des brevets**

(19)

(11) Veröffentlichungsnummer: **0 100 049**
**A2**

# (12) EUROPÄISCHE PATENTANMELDUNG

(21) Anmeldenummer: **83107027.1**

(22) Anmeldetag: **18.07.83**

(51) Int. Cl.³: **B 60 N 1/08,** B 60 R 21/10

(30) Priorität: **19.07.82 DE 3226932**

(43) Veröffentlichungstag der Anmeldung: **08.02.84**
**Patentblatt 84/6**

(84) Benannte Vertragsstaaten: **DE FR GB SE**

(71) Anmelder: **C. Rob. Hammerstein GmbH, P.O. 13 01 18,
D-5650 Solingen 13 (DE)**

(72) Erfinder: **Becker, Burckhard, Dipl.-Ing.,
Obenkatternberg 25, D-5650 Solingen (DE)**
Erfinder: **Frohnhaus, Ernst-Reiner, Hammerstrasse 13,
D-5650 Solingen 11 (DE)**
Erfinder: **Gedig, Alfred, Dipl.-Ing., Hammerstrasse 28,
D-5650 Solingen 11 (DE)**
Erfinder: **Bauer, Heinz, Hammerstrasse 9,
D-5650 Solingen 11 (DE)**

(74) Vertreter: **Bauer, Wulf, Dr., Wolfgang-Müller-Strasse 12,
D-5000 Köln 51 (Marienburg) (DE)**

(54) **Längsführung für einen Fahrzeugsitz mit sitzbefestigbarem Sicherheitsgurt.**

(57) Bei der Längsführung für einen Fahrzeugsitz mit sitzbefestigbarem Sicherheitsgurt ist die Bodenschiene der Längsführung so an der Bodengruppe des Fahrzeugs befestigt, daß zwischen der Bodenschiene und der Bodengruppe ein Freiraum ausgebildet wird. In diesem Freiraum bewegt sich ein die Bodenschiene übergreifendes Zugelement bei Längsverstellung der Sitzschiene gegenüber der Bodenschiene. Dieses Zugelement ist als Zuglasche ausgebildet und umgreift die Längsführung nur teilweise. Der Befestigungsbereich der Zuglasche an der Sitzschiene befindet sich auf der einen Seite des Freiraums, der Haltebereich für ein Gurtschloß an dieser Zuglasche befindet sich auf der anderen Seite dieses Freiraums. Bei einem unfallbedingten Zug am Haltebereich der Zuglasche wird das Profil der Längsführung bereichsweise verdreht und zusammengedrückt.

ACTORUM AG

Anmelder: Firma C. Rob. Hammerstein GmbH in 5650 Solingen 13

Bezeichnung: Längsführung für einen Fahrzeugsitz mit sitzbefestigbarem Sicherheitsgurt

---

Die Erfindung bezieht sich auf eine Längsführung für einen Fahrzeugsitz mit sitzbefestigbarem Sicherheitsgurt, bei der der Fahrzeugsitz mit einer Sitzschiene verbunden ist,

- die in einer an der Bodengruppe des Fahrzeugs gehaltenen Bodenschiene längs verschiebbar geführt ist, und
- die mit einem für die Befestigung eines Gurtschlosses ausgebildeten Zugelement verbunden ist,

bei der die Bodenschiene über zwei Befestigungsteile so an der Bodengruppe befestigbar ist, daß zwischen der Bodenschiene und der Bodengruppe des Fahrzeugs ein Freiraum ausgebildet wird, in dem sich das die Bodenschiene übergreifende Zugelement bei Längsverstellung der Sitzschiene gegenüber der Bodenschiene bewegt.

Bei dieser aus Fahrzeugen der Marke Rover bekannten Längsführung ist das Zugelement als Ring ausgebildet, der die Längsführung umgreift. Am ringförmigen Zugelement ist oben das Gurtschloß für den Sicherheitsgurt befestigt. Bei unfallbedingten, am Gurtschloß angreifenden Kräften behindert das ringförmige Zugelement ein reißverschlußartiges Aufreißen der beiden Schienen der Längsführung, da es diese vollständig umschließt. Bei einer unfallbedingten Belastung können sich die beiden Schienen zwar bis zu einem gewissen Grade voneinander trennen, nämlich bis das notwendigerweise die Bodenschiene mit Spiel umgreifende, ringförmige Zugelement an dieser Bodenschiene fest anliegt, anschließend behindert aber dieses ringförmige Zugelement das weitere Herausreißen der Sitzschiene aus der Bodenschiene. Insgesamt wird bei der bekannten Längsführung somit ein weitgehend sicherer Halt des sitzbefestigten Sicherheitsgurtes auch bei hohen Belastungen erreicht.

Nachteilig bei der bekannten Längsführung ist jedoch der Umstand, daß sich bei hohen, am ringförmigen Zugelement angreifenden Kräften die beiden Schienen zunächst voneinander trennen, so daß ihr wechselseitiger Eingriff geschwächt wird. In diesem Zustand aber ist die Aufnahmefähigkeit der bekannten Längsführung für hohe, am Gurtschloß angreifende Zugkräfte geringer als im Fall einer intakten Längsführung, die Ausreißfestigkeit hängt dann im wesentlichen vom Profil der Bodenschiene und den mechanischen und elastischen Eigenschaften des ringförmigen Zugelementes ab, das unter der Wirkung der Kräfte in die Länge gezogen wird und dabei in Querrichtung enger wird. Bei dieser Deformation des ringförmigen Zugelementes können sich die Schienen um ein weiteres Stück voneinander trennen.

Nachteilig bei der bekannten Längsführung ist aber insbesondere auch, daß durch das ringförmige Zugelement die Sitzschiene im Befestigungsbereich dieses Zugelementes ausgesteift wird und dadurch an dieser Stelle andere mechanische und insbesondere elastische Eigenschaften vorliegen, als an anderen, entsprechenden und nicht ausgesteiften Bereichen der Sitzschiene. Diese örtliche Verstärkung der Sitzschiene macht sich nachteilig bei einer Verschiebebewegung der Schienen gegeneinander bemerkbar, weil die Schienen im Bereich des ringförmigen Zugelementes geringere Elastizität aufweisen als in ihren sonstigen Bereichen. Bei den mit Wälzkörpern oder mit Gleitmitteln ausgerüsteten Längsführungen müssen die beiden Schienen in Abhängigkeit von der Belastung des Fahrzeugsitzes und ihrer gegenseitigen Verschiebungsstellung lokal elastisch nachgeben können, weil ansonsten für die Verschiebung zu hohe Kräfte erforderlich sind. Da das ringförmige Zugelement der bekannten Längsführung einen Teilbereich der Längsführung aussteift, ist die Leichtgängigkeit der beiden Schienen der Längsführung bei einer Verschiebebewegung nicht in allen Verschiebungszuständen gewährleistet, insbesondere aber ist die für die Verschiebung erforderliche Kraft nicht entlang des gesamten Verschiebungsweges annähernd gleich, sie variiert. Dies ist bei der praktischen Benutzung der bekannten Längsführung nachteilig.

Aufgabe der Erfindung ist es, die Nachteile der bekannten Längsführung zu vermeiden und unter Beibehaltung des vorteilhaft hohen Aufnahmevermögens für Zugkräfte, die über das Zugelement eingeleitet werden, eine Längsführung der eingangs genannten Art zu schaffen, die eine verbesserte Einleitung der unfallbedingten Zugkräfte weitgehend ohne Trennung der beiden Schienen voneinander ermöglicht.

Diese Aufgabe wird dadurch gelöst, daß das Zugelement als Zuglasche ausgebildet ist, die die Längsführung nur teilweise umgreift und deren Befestigungsbereich an der Sitzschiene auf der einen Seite des Freiraums und deren Haltebereich für ein Gurtschloß sich auf der anderen Seite dieses Freiraums befindet, so daß bei einem unfallbedingten Zug am Haltebereich das Profil der Längsführung bereichsweise verdreht und zusammengedrückt wird.

Bei dieser zumeist L-förmig oder U-förmig ausgebildeten Zuglasche bewirken im Anfangsstadium einer unfallbedingten Belastung die Zugkräfte kein Trennen der Schienen, sondern zunächst nur eine Anlage der Zuglasche an das Außenprofil der Längsführung. Im Gegensatz zur bekannten Längsführung, bei der zunächst die beiden Schienen soweit voneinander getrennt werden müssen, bis sie in Anlage an entgegengesetzten Stellen des ringförmigen Zugelementes liegen, erfolgt bei der Zuglasche zunächst nur eine Deformation der Lasche selbst und nicht der Längsführung. Dadurch bleiben die beiden Schienen der Längsführung im wechselseitigen Eingriff, die Längsführung kann demzufolge auch höhere Kräfte aufnehmen.

Insbesondere wirkt sich dieser beschriebene Vorteil der erfindungsgemäßen Längsführung bei Zugkräften geringerer Stärke aus, wie sie zum Beispiel bei Auffahrunfällen mit nur geringer Geschwindigkeit auftreten. Bei der bekannten Längsführung bewirken diese geringeren Zugkräfte ein Trennen der beiden Schienen gegeneinander. Dabei verbiegen sie sich zwangsläufig. Ein Teil der Verbiegung wird elastischer Art sein, führt also nicht zu bleibenden Verformungen, ein Teil der Verbiegungen ist aber irreversibel und äußert sich später in einem Klemmen oder in schwergängigem Stellen der Längsführung bei der Verschiebebewegung. Bei geringen Zugkräften wird dagegen bei der erfindungsgemäßen Längsführung der Eingriff der beiden Schienen dieser Längsführung nicht beeinflußt, allenfalls kommt die Zuglasche in Nähe der Bodenschiene. Eine störende Anlage an der Bodenschiene kann jedoch durch geeignete Ausbildung der beiden Schienenprofile verhindert werden. Entscheidend ist dabei, daß die Leichtgängigkeit der Längsführung bei den diskutierten geringen Zugkräften nicht nachteilig verändert wird.

Die erfindungsgemäße Zuglasche greift schließlich nicht in die elastischen Eigenschaften der beiden Schienen selbst ein, zumal sie selbst elastisch ist, da sie nicht geschlossen ist und demzufolge nicht die bei einem ringförmig geschlossenen Zugelement sich ergebende Steifigkeit aufweist. In Weiterbildung der Erfindung wird die Zuglasche möglichst in einem neutralen Bereich des Querschnitts der Sitzschiene befestigt. Unter neutralem Bereich wird dabei ein Bereich des Sitzschienen-Querschnitts verstanden, der von den Gleit- oder Wälzkörpern ausreichend weit entfernt ist, und der sich dann, wenn die Schenkel der Sitzschiene gegeneinander federn in einem Knoten, also Schwingungsnullpunkt dieser Schwingungen befindet. Bei dieser Art der Befestigung beeinflußt die Zuglasche die elastischen Eigenschaften der Sitzschiene praktisch nicht. Dieser Einfluß wird dadurch weiter verringert, daß die Zuglasche vorteilhafterweise entlang einer parallel zur Verschieberichtung der Längsführung verlaufenden Linie mit der Sitzschiene verbunden ist, beispielsweise linienhaft angeschweißt wird. Damit ändern sich die elastischen Eigenschaften der Sitzschiene im Bereich der Befestigung dieser Zuglasche praktisch nicht.

Ein besonderer Vorteil der Erfindung liegt darin, daß auch einfachere Profilformen für die beiden Schienen verwendet werden können. Lediglich um ein Beispiel zu geben sei hier ausdrücklich auf die aus dem DE-GM 81 32 719 bekannten Schienenprofile verwiesen. Da, wie oben erläutert, die anfänglichen Zugkräfte nicht direkt auf die Längsführung, sondern zunächst nur auf die Zuglasche einwirken, ist eine hoch ausreißfeste Längsführung nicht erforderlich, es muß lediglich gewährleitet sein, daß die zwangsweise durch die Zuglasche zusammengehaltenen Schienenprofile ausreichend hohe Flächenträgheitsmomente haben.

Vorteile der Erfindung zeigen sich insbesondere auch bei einer Befestigung der erfindungsgemäßen Längsführung an im wesentlichen vertikal verlaufenden Teilen der Bodengruppe, beispielsweise am Tunnel. Bei dieser Befestigungsart bieten beispielsweise die aus dem genannten Gebrauchsmuster bekannten Längsführungen einen hohen Anteil von vertikal, also in Zugrichtung der Unfallkräfte verlaufenden Profilbereichen.

Als besonderer Vorteil der erfindungsgemäßen Längsführung ist schließlich die bei hohen, an der Zuglasche angreifenden Kräfte auftretende Verdrehung der Längsführung zu werten. Die Zuglasche umgreift die Längsführung teilweise, bei unfallbedingten Kräften wird die Zuglasche gestreckt, der Befestigungsbereich der Zuglasche an der Sitzschiene also zum Freiraum hingezogen. Die Verdrehung der beiden Schienen gegeneinander behindert das Ausreißen dieser Schienen.

Weitere Merkmale und Vorteile der Erfindung ergeben sich aus den übrigen Ansprüchen sowie der nun folgenden Beschreibung von drei Ausführungsbeispielen der Erfindung, die unter Bezugnahmen auf die Zeichnung näher erläutert werden. In dieser zeigen:

Fig. 1    eine perspektivische Darstellung eines auf zwei Längsführungen verschiebbaren Fahrzeugsitzes, von denen die eine Längsführung mit einer Zuglasche ausgerüstet ist,

Fig. 2    ein Schnittbild durch eine hochkant anzuordnende Längsführung mit Zuglasche,

Fig. 3    eine Darstellung einer Längsführung entsprechend Figur 2, jedoch mit geändertem Profil der Schienen.

Die an sich bekannte Längsführung 10 eines Fahrzeugsitzes 12 hat eine Bodenschiene 14 mit Hutprofil, die von einer C-förmigen Sitzschiene 16 umgriffen wird. Die Bodenschiene 14 wird über zwei Befestigungsteile 18 , die jeweils im Bereich der beiden Enden der Bodenschiene angeordnet sind, an einem horizontalen Teil einer (nicht dargestellten) Bodengruppe eines Fahrzeugs befestigt. Die Befestigungsteile 18 sind dabei so lang ausgebildet, insbesondere teilweise - wie dargestellt - als Hülsen ausgeführt, daß unter der Bodenschiene 14 ein Freiraum 20 freibleibt.

An der Außenseite des innenseitigen Schenkels 22 der Sitzschiene ist eine im wesentlichen U-förmige Zuglasche 24 befestigt. Die Verbindung erfolgt durch mehrere Punktschweißnähte, die auf einer parallel zur Verschieberichtung der Längsführung 10 verlaufenden Geraden liegen. Die Zuglasche 24 berührt die Längsführung 10 außer in ihrem, eben beschriebenen Befestigungsbereich 26 sonst nicht, das heißt sie untergreift die Bodenschiene 14 frei und liegt auch nicht am außenseitigen Schenkel 28 der Sitzschiene 16 an.

Würde man die Zuglasche 24 auch mit dem außenseitigen Schenkel 28 verbinden, so erhielte man zwar einen geschlossenen Umgriff der Bodenschiene 14 im Sinne der vorbekannten Längsführung des "Rover", jedoch zugleich eine deutliche Aussteifung der Sitzschiene 16 im Bereich der Zuglasche 24 . Dies würde zu den oben beschriebenen Nachteilen bei der Verschiebebewegung der Schienen 14, 16 gegeneinander führen. Außerdem würde bei einer an der Zuglasche 24 und in Richtung des Pfeils 30 wirkenden Kraft zunächst der außenseitige Schenkel 28 außer Eingriff mit dem zugehörigen Schenkel der Bodenschiene 14 gerissen, wie ebenfalls oben dargestellt wurde. Da die Zuglasche 24 jedoch den außenseitigen Schenkel 28 frei umgreift, treten diese Nachteile nicht auf.

Die Zuglasche 24 befindet sich zwischen den beiden endseitigen Befestigungsteilen 18 , ihre in Verschieberichtung gemessene Breite ist vom lichten Abstand der beiden Befestigungsteile 18 abzuziehen. Die Differenz ergibt den freien Verschiebeweg. Gegenüber einer Befestigung der Zuglasche 24 an einem frei auskragenden Ende der Längsführung, was hier ausdrücklich als mögliche Ausführungsform der Erfindung angesprochen werden soll, hat die gezeigte Anordnung der Zuglasche 24 zwischen den Befestigungsteilen 18 den Vorteil einer besseren Verankerung und damit höherer Ausreißfestigkeit der Längsführung 10 .

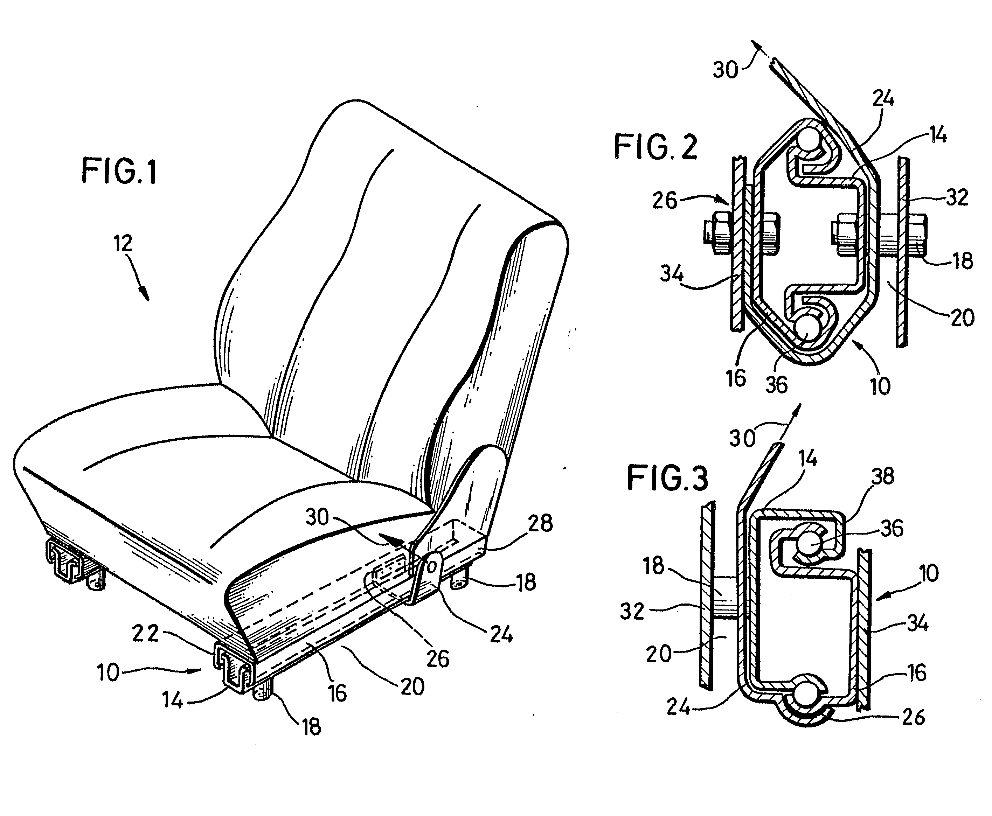

Im Gegensatz zum Ausführungsbeispiel nach Figur 1 ist die Längsführung nach Figur 2 hochkant angeordnet, das heißt sie ist an einer vertikalen Wandung 32 beispielsweise des Tunnels über zwei Befestigungsteile 18 unter Freilassen des Freiraums 20 befestigt. Die Sitzschiene 16 umgreift die so befestigte Bodenschiene 14 , sie ist mit einem Sitzträger 34 unter Zwischenlage der Zuglasche 24 verbunden. Beide Schienen sind damit lediglich im Bereich ihrer geometrischen Mitte, die zugleich Symmetrieebene für die Klappsymmetrie ist, verbunden. Dadurch werden die elastischen Eigenschaften der über Wälzkörper 36 sich gegeneinander abstützenden Schenkel der Schiene 14, 16 nicht beeinträchtigt.

Wie im Ausführungsbeispiel nach Figur 1 umgreift die Zuglasche 24 die Silhouette der Längsführung 10 und schmiegt sich mit geringem Abstand dieser an. Dadurch kommt sie bei

0100049

einer unfallbedingten Zugbelastung relativ rasch in Anlage an die Längsführung 10.

Das Ausführungsbeispiel nach Figur 3 entspricht im wesentlichen dem Ausführungsbeispiel nach Figur 2, jedoch ist das Profil der beiden Schienen 14, 16 nicht symmetrisch. Der untere Wälzkörperbereich ist relativ einfach ausgebildet, im oberen Wälzkörperbereich umklammern sich die beiden Schienen dagegen wechselseitig in Form zweier, ineinander gehakter U-Profile 38 . Mittels der erfindungsgemäßen Zuglasche 24 wird dennoch eine hohe Zugbelastbarkeit erreicht. Bei unfallbedingten Zugkräften an der Zuglasche 24 wird das Profil der Längsführung 10 unten zusammengedrückt, jedenfalls nicht getrennt. Die Zuglasche, die hier und auch in den weiteren Ausführungsbeispielen bestrebt ist, die Sitzschiene unter der Bodenschiene hindurchzuziehen, bewirkt eine Verdrehung des Profils der Längsführung 10 im Uhrzeigersinn. Die beiden oberen U-Bereiche bleiben wechselseitig eingehakt und sichern den Zusammenhalt der Längsführung 10.

Neben den in den Figuren 1 bis 3 dargestellten, bevorzugten Befestigungsbereichen 26 kann im Ausführungsbeispiel nach Figur 1 die Basis der Sitzschiene 16 oder auch der außenseitige Schenkel 28 mit der Zuglasche 24 verbunden werden. Im letzteren Fall ist die Zuglasche 24 um 360°, also eine volle Windung ausführend, um die Längsführung gebogen.

Anmelder: Firma C. Rob. Hammerstein GmbH in 5650 Solingen 13

Bezeichnung: Längsführung für einen Fahrzeugsitz mit sitzbefestigbarem Sicherheitsgurt.

Ansprüche

1. Längsführung (10) für einen Fahrzeugsitz (12) mit sitzbefestigbarem Sicherheitsgurt, bei der der Fahrzeugistz (12) mit einer Sitzschiene (16) verbunden ist,
   - die in einer an der Bodengruppe des Fahrzeugs gehaltenen Bodenschiene (14) längs verschiebbar geführt ist, und
   - die mit einem für die Befestigung eines Gurtschlosses ausgebildeten Zugelement verbunden ist,
   bei der die Bodenschiene (14) über zwei Befestigungsteile (18) so an der Bodengruppe befestigbar ist, daß zwischen der Bodenschiene (14) und der Bodengruppe ein Freiraum(20)ausgebildet wird, in dem sich das die Bodenschiene (14) übergreifende Zugelement bei Längsverstellung der Sitzschiene (16) gegenüber der Bodenschiene (14) bewegt, dadurch gekennzeichnet, daß das Zugelement als Zuglasche (24) ausgebildet ist und die Längsführung (10) nur teilweise umgreift, und daß der Befestigungsbereich (26) der Zuglasche (24) an der Sitzschiene (16) auf der einen Seite dieses Freiraums (20) und der Haltebereich für ein Gurtschloß sich auf der anderen Seite dieses Freiraums (20) befindet, so daß bei einem unfallbedingten Zug am Haltebereich der Zuglasche (24) das Profil der Längsführung (10) bereichsweise verdreht und zusammengedrückt wird.

2. Längsführung nach Anspruch 1, dadurch gekennzeichnet, daß die Zuglasche (24) entlang einer parallel zur Verschieberichtung der Längsführung (10) verlaufenden Verbindungslinie an der Sitzschiene (16) befestigt ist.

3. Längsführung nach Anspruch 1 oder 2, dadurch gekennzeichnet, daß die Zuglasche (24) in einem neutralen Bereich des Profils der Sitzschiene (16), insbesondere in einem Schwingungsnullpunkt der Sitzschiene (16) mit dieser verbunden ist.

4. Längsführung nach einem der Ansprüche 1 bis 3, dadurch gekennzeichnet, daß die Sitzschiene (16) die Bodenschiene (14) übergreift.

5. Längsführung nach einem der Ansprüche 1 bis 4, dadurch gekennzeichnet, daß die Zuglasche (24) entsprechend der äußeren Querschnittsform der Längsführung (10) gebogen ist und sich in geringem Abstand von der Außenseite der Bodenschiene (14) befindet.

6. Längsführung nach einem der Ansprüche 1 bis 5, dadurch gekennzeichnet, daß die Zuglasche (24) L-förmig oder U-förmig ausgebildet ist.

FIG.1

FIG.2

FIG.3